# EUROPÄISCHE PATENTSCHRIFT

(11) **EP 2 161 592 B1**
(45) Veröffentlichungstag und Bekanntmachung des Hinweises auf die Patenterteilung: **18.05.2011**
(21) Anmeldenummer: 09166634.7
(22) Anmeldetag: 28.07.2009
(51) Int. Cl.: G01S 7/48, G01S 7/497

(54) **Optoelektronischer Sensor**
Optoelectronic sensor
Capteur optoélectronique

(30) Priorität: 04.09.2008 DE 202008011848 U
(43) Veröffentlichungstag der Anmeldung: 10.03.2010
(73) Patentinhaber: SICK AG, 79183 Waldkirch (DE)
(72) Erfinder: Waslowski, Kai, 79312 Emmendingen (DE)
(74) Vertreter: Hehl, Ulrich

(56) Entgegenhaltungen:
- EP-A2- 0 851 427
- WO-A1-03/025592
- DE-A1- 10 064 859
- DE-U1- 20 315 009
- US-A- 5 359 404
- US-A- 5 361 001
- US-A- 6 034 857

## Beschreibung

Die Erfindung betrifft einen optoelektronischen Sensor mit einer Versorgungsspannungsüberwachungseinheit und ein Verfahren zur Überwachung der Versorgungsspannung nach dem Oberbegriff von Anspruch 1 beziehungsweise 11.

Viele optoelektronische Sensoren, beispielsweise Lichtschranken oder Lichttaster, sind mit Anzeige-LEDs ausgestattet. Beispielsweise sind eine gelbe LED für eine Empfangsanzeige, ob also der Lichtempfänger den direkten, remittierten oder reflektierten Lichtstrahl empfängt, und eine grüne LED zur Betriebsanzeige vorhanden. Die vorgesehene Funktion der Betriebsanzeige ist, dass bei dauernd leuchtender grüner LED der Sensor betriebsbereit ist.

Tatsächlich kann aber in der Praxis die Betriebsanzeige leuchten, obwohl die Betriebsspannung am Sensor für einen sicheren Betrieb gar nicht ausreicht. Mit anderen Worten genügt die Betriebsspannung in diesen Fällen lediglich, um die Betriebsanzeige und möglicherweise einige, nicht jedoch alle Komponenten des Sensors zu versorgen.

Eine wichtige denkbare Ursache für eine Unterversorgung des Sensors ist eine Vertauschung von Anschlussleitungen oder -pins. Verdrahtet man einen Sensor, welcher die üblichen Schaltausgänge aufweist, mit einem drei- oder mehrpoligen Anschlusskabel, so kann eine Vertauschung der Einzelleitungen dazu führen, dass der Sensor fehlerhaft nur über den Arbeitswiderstand im Eingang der Steuerung mit Spannung versorgt und beim Einschalten des Schaltausgangs des Sensors der Versorgungsspannungsanschluss kurzgeschlossen wird. Die Spannung am Sensorkern kann wegen der Unterversorgung zu gering für eine korrekte Funktion der Kurzschlusserkennung des Schaltausgangs sein. Der Schaltausgang wird dann durch die Überlastung zerstört.

Solange der Schaltausgang nicht einschaltet, scheint aber der Sensor zu funktionieren, und die grüne Betriebsanzeige leuchtet weiter.

Das Ergebnis kann ein zerstörter Schaltausgang sein. Darüber hinaus führt die fehlerhafte Betriebsanzeige, insbesondere verursacht durch Fehlverkabelung, zu einem nicht erkennbaren funktionsunfähigen Sensor, der zu Fehlfunktionen im Feld, mindestens aber zu mühsamen Fehlersuchen und Ausfallzeiten in der Anlage führen kann, in welcher der Sensor angeordnet ist.

Aus der DE 100 64 859 A1 ist ein Sensor mit einem Hilfssensor zur Selbstkalibrierung bekannt. In dessen ASIC wird geprüft, ob genügend Spannung vorhanden ist, um ein Zener-PROM mit Parametern auszulesen und um eine Resetschwelle zu realisieren. Damit wird aber nur die Grundversorgung des ASICs geprüft. Ob auch der Sensor als solcher seine spezifizierte Versorgungsspannung erhält, und ob Leitungen vertauscht sind, welche zu einem Kurzschluss in dem Schaltausgang führen, erkennt der Sensor gemäß diesem Stand der Technik nicht. Folglich wird auch ein Unterschreiten der Spannung nicht als Fehlfunktion des Sensors über die Betriebsanzeige dem Benutzer dargestellt.

In der DE 101 42 011 B4 wird ein Spannungssensor offenbart, mit dem ein Versorgungspotentialanschluss auf einen oberen und unteren Grenzwert überwacht wird. Auch dieser Spannungssensor ist auf die üblichen Spannungen einer Schaltung im Bereich von ca. 1-5 Volt ausgelegt. Dieser herkömmliche Spannungssensor ist daher erneut nicht dafür vorgesehen, die vorgesehene Spannung eines Sensors zu garantieren.

Aus der DE 203 15 009 U1 ist eine Lichtschranke in einem Münzgerät bekannt. Dabei wird der Eingang der Sendediode an eine Überwachungsschaltung angeschlossen und das Signal des lichtempfindlichen Empfangselements nicht verarbeitet, wenn es unterhalb oder oberhalb eines vorgegebenen Spannungsbandes liegt.

Aus der US 5,359,404 ist eine laserbasierte Geschwindigkeitsmessvorrichtung bekannt. Es sind zwei Linearregler vorgesehen, um jeweils die Spannungen an einem Lasersender und einer Avalanchediode der Vorrichtung zu regeln.

Es ist daher Aufgabe der Erfindung, einen optoelektronischen Sensor mit einer verbesserten Betriebsbereitschaft anzugeben.

Diese Aufgabe wird durch einen Sensor mit einer Versorgungsspannungsüberwachung einer Mindestversorgungsspannung des Sensors gemäß Anspruch 1 und ein Verfahren zur Überwachung der Versorgungsspannung gemäß Anspruch 11 gelöst.

Die erfindungsgemäße Lösung beruht auf dem Prinzip, eine spezifizierte Versorgungsspannung des Sensors zu gewährleisten. Die Betriebsanzeige leuchtet nur dann, wenn die Betriebsspannung für einen sicheren Betrieb des Sensors ausreicht. Da bei zu geringer Betriebsspannung auch die Kurzschlussüberwachung eines Schaltausgangs unterversorgt und damit funktionsunfähig sein kann, ist kumulativ oder alternativ vorgesehen, den Schaltausgang nur bei ausreichender Betriebsspannung aktivieren zu können.

Die Erfindung hat den Vorteil, dass eine Fehlfunktion aufgrund zu geringer Spannungsversorgung sofort erkannt werden kann. Zugleich werden auch Verkabelungsfehler, insbesondere Vertauschungen von Leitungen oder Pins, rechtzeitig und vor Auslösen von Kurzschlüssen erkannt. Damit wird die Fehlersuche und infolgedessen die Wartung erheblich beschleunigt, und Ausfallzeiten der Anlage, deren Teil der Sensor ist, minimiert oder ganz verhindert.

Erfindungsgemäß ist also die zu überwachende Versorgungsspannung diejenige des Sensors, nicht nur eine Mindestanforderung eines Logikbausteins des Sensorkerns, wie dies bei herkömmlichen Resetschwellen der Fall wäre. Wenn die für den Sensor spezifizierte Spannung verfügbar ist, schließt dies aber umgekehrt auch eine hinreichende Versorgung der Sensorsteuerung ein. Die für den Sensor erforderliche Spannung weicht mit etwa 10-30 Volt deutlich von bekannten Resetschwellen in der Größenordnung von 1-5 Volt ab. Mit letzteren ließe sich keineswegs die volle Funktion des Sensors garantieren. Es ist, daher auch nicht damit getan, die Betriebsbereitschaft mit einer erfolgreichen Überwachung der herkömmlichen Resetschwellen zu koppeln, da dieser Funktionstest zu kurz greift. Die Situation wäre gegenüber herkömmlichen Betriebsanzeigen kaum verbessert, welche durch ihr Leuchten auch anzeigen, dass eine gewisse Spannung vorhanden ist - sonst könnten sie nicht leuchten. Eine verlässliche Aussage über die Betriebsbereitschaft bieten die herkömmlichen Vorgehensweisen nicht.

Mit einem Maß für die vorgegebene Mindestversorgungsspannung ist gemeint, dass die Referenz nicht unmittelbar der spezifizierten Spannung entsprechen muss, sondern beispielsweise noch skaliert werden kann.

Die Steuerung ist bevorzugt auf einem digitalen Logikbaustein, insbesondere einem PLD (Programmable Logic Device), einem FPGA (Field Progammable Gate Array), einem Mikrocontroller oder als ASIC (Application Specific Integrated Circuit) implementiert. Dabei ist das ASIC nochmals bevorzugt ein mixed signal ASIC, um sowohl analoge wie digitale Ein- und Ausgänge verarbeiten zu können. Auf derartigen digitalen Logikbausteinen können immer wieder gebrauchte Funktionalitäten für Sensoren standardisiert implementiert werden, und sie sind gleichzeitig flexibel genug, auf die spezielle Anwendung oder den speziellen Sensor angepasst zu werden.

Der Sensor weist bevorzugt einen Schaltausgang auf, welcher von der Steuerung aktivierbar ist, wobei der Schaltausgang insbesondere nur dann aktiviert werden kann, wenn die Steuerung Betriebsbereitschaft feststellt. Ein logischer Schaltausgang genügt für viele optoelektronische Sensoren, vor allem eindimensionale Sensoren wie Einweg- oder Reflexionslichtschranken oder Lichttaster. Das Schaltsignal bedeutet dann meist, dass ein Objekt gegebenenfalls mit bestimmten Eigenschaften wie Kontrast, Größe, Kontur oder Farbe anwesend ist oder nicht. Der Schaltausgang kann differentiell ausgebildet sein, das Signal also zusätzlich negiert zur Verfügung stellen. Wenn die Steuerung Betriebsbereitschaft anzeigt, ist damit auch die Versorgung des Logikbausteins und insbesondere von dessen Kurzschlussüberwachung gesichert. Indem nur in dieser Situation der Schaltausgang aktivierbar ist, wird Überlast und damit Zerstörung des Schaltausgangs verhindert.

In vorteilhafter Weiterbildung ist die Steuerung dafür ausgebildet, die Betriebsbereitschaft des Sensors in Abhängigkeit davon festzustellen, ob ein Kurzschluss an dem Schaltausgang vorliegt. Zusätzlich zur Spannung wird also auch der Strom am Schaltausgang überwacht. Damit ist ausgeschlossen, dass Betriebsbereitschaft angezeigt wird, obwohl der Schaltausgang falsch angeschlossen ist, und ein Defekt wird verhindert oder zumindest erkannt.

Der Schaltausgang ist bevorzugt intern in dem digitalen Logikbaustein oder extern, insbesondere als eigener Transistor ausgebildet, und die Überwachung auf Kurzschluss ist jeweils in dem digitalen Logikbaustein implementiert. Je nach Bedarf kann also einfach Funktionalität des Logikbausteins ausgenutzt oder flexibel ein Transistor mit geforderten Eigenschaften verwendet werden. Die Überwachung selbst kann auf diese Weise ohne besonderen Aufwand implementiert werden.

Die Versorgungsspannungsüberwachungseinheit ist bevorzugt analog ausgeführt und weist insbesondere einen Komparator auf, oder sie ist alternativ digital ausgeführt, wobei die anliegende Versorgungsspannung mittels eines Analog-Digitals-Wandlers der Steuerung verfügbar gemacht werden kann, um sie mit einem Referenzspannungswert zu vergleichen. Je nach Anwendung kann der Komparator oder der A/D-Wandler das passendere und günstigere Bauteil sein.

Der Wert der internen Referenzspannung ist bevorzugt im Endtest der Steuerung und/oder des Sensors abgeglichen, wobei insbesondere der Wert digital in einem Speicher der Steuerung abgelegt ist. Damit kann trotz individueller Unterschiede in den Sensoren jeweils die richtige Referenz sichergestellt werden.

Alternativ ist die Referenzspannung analog mittels Laser-Trimmen des Logikbausteins abgeglichen. Auch hierbei wird die richtige Referenz diesmal in analoger Alternativausführung gesichert.

Bevorzugt ist eine Anzeige vorgesehen, insbesondere eine LED, welche anzeigen kann, ob die Steuerung Betriebsbereitschaft detektiert oder nicht, und wobei insbesondere Betriebsbereitschaft als durchgehende Anzeige und fehlende Betriebsbereitschaft durch Deaktivieren der Anzeige oder eine Blinksequenz angezeigt werden kann. Die üblicherweise grüne Anzeige-LED kann statt einer Blinksequenz auch die Farbe wechseln, beispielsweise auf Rot. Selbstverständlich sind andere Farben und andere Codierungen denkbar.

Der Sensor weist bevorzugt einen Vorausfallmeldeausgang oder eine Sensorschnittstelle insbesondere nach dem IO-Link-Standard auf, wobei die Steuerung dafür ausgebildet ist, den Status der Betriebsbereitschaftsfeststellung über den Vorausfallmeldeausgang oder die Sensorschnittstelle auszugeben. Damit hat die übergeordnete Steuerung jederzeit Zugriff auf den Status, und es kann unabhängig vom Betriebsort des Sensors und rechtzeitig eine Wartung oder zumindest eine Warnung veranlasst werden.

Bevorzugt ist ein Temperaturfühlelement vorgesehen und die Steuerung dafür ausgebildet, Betriebsbereitschaft nur dann festzustellen, wenn eine gemessene Temperatur innerhalb eines zulässigen Intervalls liegt. Damit wird nicht nur eine allgemeine Überhitzung detektiert, sondern auch sichergestellt, dass Temperaturabhängigkeiten von Spannungsversorgung oder Referenzspannung nicht zu einer falschen Betriebsbereitschaftsanzeige führen. Die Temperatur kann im Sensor oder in der Sensorsteuerung gemessen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine Blockdarstellung eines erfindungsgemäßen Sensors mit Spannungs- überwachung und angeschlossener Spannungsquelle;
- Fig. 2: eine Ausschnittsdarstellung des Anschlusses der Spannungsquelle und des Schaltausgangs des Sensors gemäß Figur 1 bei korrektem Leitungs- anschluss; und
- Fig. 3: eine Darstellung gemäß Figur 2 bei nicht korrektem, gekreuztem Leitungs- anschluss.

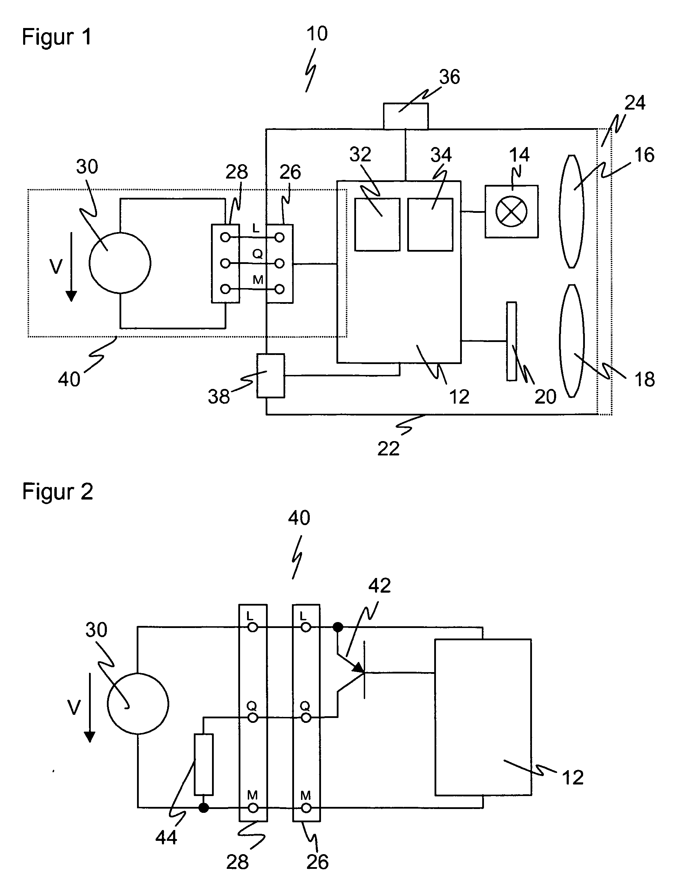

Figur 1 zeigt eine Ausführungsform eines erfindungsgemäßen Sensors 10. Der Sensor 10 kann ein beliebiger optoelektronischer Sensor sein, beispielsweise eine Lichtschranke oder ein Lichttaster.

In einer Sensorsteuerung 12, auch als Sensorkern bezeichnet, ist die elektronische Funktionalität des Sensors 10 implementiert. Die Sensorsteuerung 12 kann beispielsweise ein Mikrocontroller, ein FPGA oder ein ASIC sein. Ein Lichtsender 14 wird von der Sensorsteuerung 12 gesteuert und strahlt über eine Sendeoptik 16 Licht in einen Überwachungsbereich aus, welches dort reflektiert oder remittiert und über eine Empfangsoptik 18 in einem Empfangselement 20 detektiert wird. Das entsprechende Empfangssignal wird in der Sensorsteuerung 12 ausgewertet.

Dieser Aufbau ist vereinfacht und nur als Beispiel zu verstehen, da die entsprechenden Komponenten optoelektronischer Sensoren bekannt sind. Sämtliche denkbaren Formen eines Lichtsenders 14, wie eine Halogenlampe, ein als LED oder Laserdiode ausgebildetes Halbleiterelement, eines Lichtempfängers 20 als Photodiode bis hin zu einer als CCD- oder CMOS-Chip ausgebildeten Empfangszeile oder Empfangsmatrix, einer Optik 16, 18 wie dargestellt als einfache Sammellinse oder andere Optiken sind möglich. Entsprechend sind auch andere Anordnungen als gemäß dem dargestellten Doppelaugenprinzip denkbar, beispielsweise eine Autokollimationsanordnung. Schließlich ist auch denkbar, dass nur Sender 14 oder nur Empfänger 18 vorgesehen ist, wie beispielsweise im Falle einer Einweglichtschranke. Der Sensor 10 ist zum Schutz von einem Gehäuse 22 mit einer Frontscheibe 24 umgeben.

Der Sensor 10 und innerhalb des Sensors 10 die Sensorsteuerung 12 hat einen Anschluss 26, der beispielhaft als dreipoliger Anschluss mit den Leitungen M (Masse), L (stromführend) und Q (logischer Schaltausgang) dargestellt ist. Zusätzliche Leitungen oder Anschlusspins sind möglich, etwa ein vierpoliger Anschluss mit einem zusätzlichen invertierten logischen Schaltausgang. Für die Erfindung wesentlich ist zunächst nur eine Spannungsversorgung für den Sensor 10 sowie in den meisten praktischen Fällen zumindest ein Schaltausgang.

Über den Anschluss 26 wird mit einem entsprechenden Anschluss 28 als Gegenstück eine Spannungsversorgung 30 mit dem Sensor 10 verbunden. Diese Spannungsversorgung 30 ist in der Praxis üblicherweise Teil einer übergeordneten Steuerung oder SPS (speicherprogrammierbare Steuerung) oder eine I/O-Box.

In der Sensorsteuerung 12 ist eine Einheit 32 zur Erzeugung einer internen Referenzspannung vorgesehen. Eine Spannungsversorgungsüberwachung 34 der Steuerung 12 überprüft mit Hilfe dieser internen Referenzspannung 32, ob die von der Spannungsversorgung 30 anliegende Betriebsspannung einer im Datenblatt des Sensors vorgesehenen, in der Sensorsteuerung 12 hinterlegten Mindestspannung entspricht, also beispielsweise einen von 10 Volt bis 30 Volt vorgegebenen Mindestwert hat. Ist das der Fall, so erkennt die Sensorsteuerung dies als Betriebsbereitschaft, ansonsten als fehlende Betriebsbereitschaft.

Die Steuerung ist mit einer Anzeige 36 verbunden, beispielsweise einer grünen LED, über deren Leuchtverhalten die Betriebsbereitschaft oder die fehlende Betriebsbereitschaft des Sensors 10 signalisiert werden kann. Alternativ oder zusätzlich kann ein Signal, welches den Status der Betriebsbereitschaft trägt, auch über einen weiteren Ausgang 38 des Sensors 10 ausgegeben werden. Dabei kann es sich speziell um einen Vorausfallmeldeausgang für eine übergeordnete Steuerung handeln. Der Ausgang 38 kann nach einem Datenaustauschprotokoll ausgebildet sein, beispielsweise IO-Link. Der Anschluss 26 und der Ausgang 38 sind in der Figur 1 der besseren Übersicht halber getrennt dargestellt. Gewöhnlich wird man den Ausgang 38 davon abweichend als einen oder mehrere zusätzliche Pins des Anschlusses 26 ausbilden.

Figur 2 zeigt den mit Bezugszeichen 40 bezeichneten Ausschnitt der Figur 1 mit weiteren Details bei korrekter Verbindung der Anschlussleitungen L, Q und M. Über die stromführende Leitung L und die Masseleitung M liegt die Betriebsspannung der Spannungsversorgung 30 an der Sensorsteuerung 12 an. Mittels eines Transistors 42 kann die Sensorsteuerung 12 den Ausgang Q einschalten, welcher über einen Arbeitswiderstand 44 im Eingang der Spannungsversorgung 30 verbunden ist.

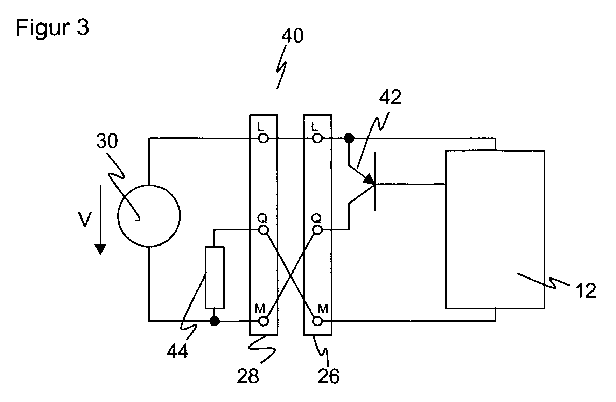

Figur 3 zeigt eine Situation, in welcher die Anschlussleitungen L, Q, M nicht korrekt verbunden sind. Die beiden Leitungen Q und M wurden vertauscht und fälschlich gekreuzt angeschlossen. Der Sensor 10 beziehungsweise dessen Sensorsteuerung 12 wird nunmehr über den Arbeitswiderstand 44 mit Spannung versorgt. Schaltet die Sensorsteuerung 12 jetzt den Transistor 42, um den Schaltausang Q einzuschalten, so ist der Transistor 42 direkt und unter Umgehung des Arbeitswiderstands 44 mit der stromführenden Leitung L und Masse M verbunden, also kurzgeschlossen. Die Sensorsteuerung 12 kann dafür ausgebildet sein, derartige Kurzschlüsse zu erkennen und den Transistor 42 nicht durchzuschalten, um eine Zerstörung des Schaltausgangs zu verhindern. Dazu muss die Sensorsteuerung 12 selbst hinreichend mit Spannung versorgt sein, um diese Kurzschlusserkennung sicher durchführen zu können. Dies wird mittels der Spannungsüberwachung 34 sichergestellt.

Die dargestellten Ausführungsformen sind nur beispielhaft zu verstehen. Abweichend von der Darstellung in den Figuren 1 bis 3 für einen Typ P-Sensor mit PNP-Transistor kann auch ein NPN-Transistor eingesetzt werden, die Situation ist bei derartigen Typ N-Sensoren analog.

Die Spannungsüberwachung 34 und die Referenzspannungsquelle 32 können wie dargestellt digital in der Sensorsteuerung 12 implementiert sein. Dazu können Referenzwerte in einem Speicher hinterlegt sein, und der zu prüfende Wert der verfügbaren Versorgungsspannung wird über einen nicht dargestellten A/D-Wandler zugeführt. Die Referenzwerte können beispielsweise bei einem Endtest des Logikbausteins, etwa des ASICs (Wafertest) oder bei einem Endtest des Sensors festgestellt und in einem bevorzugt nichtflüchtigen Speicher wie einem OTP-Speicher (One Time Programmable) oder einem EEPROM (Eletrically Erasable Programmable Read Only Memory) abgelegt werden.

Alternativ kann die Spannungsversorgung analog über einen Komparator implementiert sein. Ein analoger Abgleich kann durch Laser-Trimmern des Logikbausteins oder ASICs erfolgen.

Der Schaltausgang Q kann wie in den Figuren 2 und 3 dargestellt über einen eigenen Transistor 42, aber auch abweichend intern in der Sensorsteuerung 12 und deren Logikbaustein realisiert sein. Der durch den Transistor fließende Strom wird dann jeweils zur Kurzschlussüberwachung durch die Sensorsteuerung 12 überwacht.

Schließlich ist denkbar, in dem Sensor 10 oder in der Sensorssteuerung 12 die Temperatur zu messen und bei Abweichen von einem vorgegebenen Betriebstemperaturintervall, vor allem Überschreiten einer zulässigen Höchstemperatur, fehlende Betriebsbereitschaft anzuzeigen. Damit wird insbesondere sichergestellt, dass die Versorgungsspannungs- und Kurzschlussüberwachung nicht durch die Temperatur beeinträchtigt ist.

## Patentansprüche

1. Optoelektronischer Sensor (10) mit einem Lichtsender (14) und/oder einem Lichtempfänger (20), einer Steuerung (12) sowie mit einer Versorgungsspannungsüberwachungseinheit (34),
**dadurch gekennzeichnet,**
**dass** die Versorgungsspannungsüberwachungseinheit (34) eine anliegende Versorgungsspannung durch Vergleich mit einer intern erzeugten Referenzspannung (32) überprüfen kann, dass die intern erzeugte Referenzspannung (32) ein Maß für eine vorgegebene Mindestversorgungsspannung des Sensors (10) ist, welche einen Wert von 10 bis 30 Volt annehmen kann, und dass die Steuerung (12) dafür ausgebildet ist, die Betriebsbereitschaft des Sensors (10) in Abhängigkeit davon festzustellen, ob die Mindestversorgungsspannung verfügbar ist, indem die Versorgungsspannungsüberwachungseinheit (34) überprüft, ob eine von einer Spannungsversorgung (30) an einem Anschluss (26) des Sensors (10) anliegende Betriebsspannung der Mindestversorgungsspannung entspricht, um eine spezifizierte Versorgungsspannung des Sensors (10) zu gewährleisten, die genügt, alle Komponenten des Sensors (10) zu versorgen und somit die volle Funktion des Sensors (10) sicherzustellen,
**dass** der Sensor (10) einen Schaltausgang (42, Q) aufweist, welcher von der Steuerung (12) aktivierbar ist, und die Steuerung (12) dafür ausgebildet ist, die Betriebsbereitschaft des Sensors (10) in Abhängigkeit davon festzustellen, ob ein Kurzschluss an dem Schaltausgang (42, Q) vorliegt und dass eine Anzeige (36) vorgesehen ist, mittels derer anzeigbar ist, ob die Steuerung (12) Betriebsbereitschaft detektiert oder nicht, oder wobei ein Ausgang (38) vorgesehen ist, über den ein Signal ausgebbar ist, welches den Status der Betriebsbereitschaft trägt.

2. Sensor (10) nach Anspruch 1,
wobei der Schaltausgang (42, Q) nur dann aktiviert werden kann, wenn die Steuerung (12) Betriebsbereitschaft feststellt.

3. Sensor nach Anspruch 1 oder 2,
wobei die Steuerung (12) auf einem digitalen Logikbaustein, insbesondere einem PLD, einem FPGA, einem Mikrocontroller oder als ASIC implementiert ist.

4. Sensor (10) nach Anspruch 3, wobei der Schaltausgang (42, Q) intern in dem digitalen Logikbaustein oder extern, insbesondere als eigener Transistor (42) ausgebildet ist, und wobei die Überwachung auf Kurzschluss jeweils in dem digitalen Logikbaustein implementiert ist.

5. Sensor (10) nach einem der vorhergehenden Ansprüche,
wobei die Versorgungsspannungsüberwachungseinheit (34) analog ausgeführt ist, insbesondere einen Komparator aufweist, oder digital ausgeführt ist und die anliegende Versorgungsspannung mittels eines Analog-Digitals-Wandlers der Steuerung (12) verfügbar gemacht werden kann, um sie mit einem Referenzspannungswert zu vergleichen.

6. Sensor (10) nach einem der vorhergehenden Ansprüche,
wobei der Wert der internen Referenzspannung (32) im Endtest der Steuerung (10) und/oder des Sensors (10) abgeglichen ist, und wobei insbesondere der Wert digital in einem Speicher der Steuerung (12) abgelegt ist.

7. Sensor (10) nach einem der vorhergehenden Ansprüche,
wobei die Referenzspannung (32) analog mittels Laser-Trimmen des Logikbausteins (12) abgeglichen ist.

8. Sensor (10) nach einem der vorhergehenden Ansprüche,
wobei die Anzeige (36) eine LED aufweist, und wobei Betriebsbereitschaft als durchgehende Anzeige und fehlende Betriebsbereitschaft durch Deaktivieren der Anzeige (36) oder eine Blinksequenz angezeigt werden kann.

9. Sensor (10) nach einem der vorhergehenden Ansprüche,
wobei der Ausgang (38) als Vorausfallmeldeausgang (38) oder als Sensorschnittstelle (38) nach dem 10-Link-Standard ausgeführt ist, und wobei die Steuerung (12) dafür ausgebildet ist, den Status der Betriebsbereitschaftsfeststellung über den Vorausfallmeldeausgang (38) oder die IO-Link-Schnittstelle (38) auszugeben.

10. Sensor (10) nach einem der vorhergehenden Ansprüche,
wobei ein Temperaturfühlelement vorgesehen ist und die Steuerung (12) dafür ausgebildet ist, Betriebsbereitschaft nur dann festzustellen, wenn eine gemessene Temperatur innerhalb eines zulässigen Intervalls liegt.

11. Verfahren zur Überwachung der Versorgungsspannung eines optoelektronischen Sensors (10) mit einem Lichtsender (14) und/oder einem Lichtempfänger (20), wobei eine anliegende Versorgungsspannung überprüft wird,
**dadurch gekennzeichnet,**
**dass** die anliegende Versorgungsspannung durch Vergleich mit einer intern erzeugten Referenzspannung (32) überprüft wird, dass die intern erzeugte Referenzspannung (32) ein Maß für eine vorgegebene Mindestversorgungsspannung des Sensors (10) ist, welche einen Wert von 10 bis 30 Volt annehmen kann, und dass die Betriebsbereitschaft des Sensors (10) in Abhängigkeit davon festgestellt wird, ob die Mindestversorgungsspannung verfügbar ist, indem eine Versorgungsüberwachungseinheit (34) überprüft, ob eine von einer Spannungsversorgung (30) an einem Anschluss (26) des Sensors (10) anliegende Betriebsspannung der Mindestversorgungsspannung entspricht, um eine spezifizierte Versorgungsspannung des Sensors (10) zu gewährleisten, die genügt, alle Komponenten des Sensors (10) zu versorgen und somit die volle Funktion des Sensors (10) sicherzustellen, dass die Betriebsbereitschaft des Sensors (10) weiterhin in Abhängigkeit davon festgestellt wird, ob ein Kurzschluss an einem Schaltausgang (42, Q) vorliegt und dass angezeigt wird, ob Betriebsbereitschaft detektiert wird oder nicht, oder dass ein Signal ausgegeben wird, welches den Status der Betriebsbereitschaft trägt.

## Claims

1. An optoelectronic sensor (10) having a light transmitter (14) and/or a light receiver (20), a control (12), as well as having a supply voltage monitoring unit (34),
**characterised in that**
the supply voltage monitoring unit (34) can check an applied supply voltage by comparison with an internally generated reference voltage (32); **in that** the internally generated reference voltage (32) is a measure for a defined minimum supply voltage of the sensor (10) which can adopt a value from 10 to 30 volts; and **in that** the control (12) is designed to determine the operating readiness of the sensor (10) in dependence on whether the minimum supply voltage is available **in that** the supply voltage monitoring unit (34) checks whether an operating voltage applied by a voltage supply (30) to a connection (26) of the sensor (10) corresponds to the minimum supply voltage to ensure a specified supply voltage of the sensor (10) which is sufficient to supply all components of the sensor (10) and thus to ensure the full function of the sensor (10);
**in that** the sensor (10) has a switching output (42, Q) which can be activated by the control (12) and the control (12) is designed to determine the operating readiness of the sensor (10) in dependence on whether a short-circuit is present at the switching output (42, Q);
and **in that** a display (36) is provided by means of which it can be indicated whether the control (12) detects operating readiness or not, or wherein an outlet (38) is provided via which a signal can be output which carries the status of the operating readiness.

2. A sensor (10) in accordance with claim 1,
wherein the switching output (42, Q) can only be activated when the control (12) determines operating readiness.

3. A sensor in accordance with claim 1 or claim 2,
wherein the control (12) is implemented on a digital logic module, in particular a PLD, an FPGA, a microcontroller or as an ASIC.

4. A sensor (10) in accordance with claim 3,
wherein the switching output (42, Q) is designed internally in the digital logic module or externally, in particular as a separate transistor (42); and wherein the monitoring for short-circuit is in each case implemented in the digital logic module.

5. A sensor (10) in accordance with any one of the preceding claims,
wherein the supply voltage monitoring unit (34) is designed as analogue, in particular has a comparator, or is designed as digital and the applied supply voltage can be supplied to the control (12) by means of an analogue/digital converter to compare it with a reference voltage value.

6. A sensor (10) in accordance with any one of the preceding claims,
wherein the value of the internal reference voltage (32) is equalised in the end test of the control (10) and/or of the sensor (10); and wherein in particular the value is stored digitally in a memory of the control (12).

7. A sensor (10) in accordance with any one of the preceding claims,
wherein the reference voltage (32) is equalised in an analogue manner by means of laser trimming of the logic module (12).

8. A sensor (10) in accordance with any one of the preceding claims,
wherein the display (36) has an LED; and wherein operating readiness can be indicated as a continuous display and a lack of operating readiness can be indicated by deactivation of the indicator (36) or by a blinking sequence.

9. A sensor (10) in accordance with any one of the preceding claims,
wherein the output (38) is designed as a prefailure signalling output (38) or as a sensor interface (38) in accordance with the 10 link standard; and wherein the control (12) is designed to output the statue of the operating readiness determination via the prefailure signalling output (38) or via the IO link interface (38).

10. A sensor (10) in accordance with any one of the preceding claims,
wherein a temperature sensor element is provided and the control (12) is designed only to determine operating readiness when a measured temperature lies within a permitted interval.

11. A method for monitoring the supply voltage of an optoelectronic sensor (10) having a light transmitter (14) and/or a light receiver (20), wherein an applied supply voltage is checked,
**characterised in that**
the applied supply voltage is checked by comparison with an internally generated reference voltage (32); **in that** the internally generated reference voltage (32) is a measure for a defined minimum supply voltage of the sensor (10) which can adopt a value from 10 to 30 volts; and **in that** the operating readiness of the sensor (10) is determined in dependence on whether the minimum supply voltage is available **in that** a supply voltage monitoring unit (34) checks whether an operating voltage applied by a voltage supply (30) to a connection (26) of the sensor (10) corresponds to the minimum supply voltage to ensure a specified supply voltage of the sensor (10) which is sufficient to supply all components of the sensor (10) and thus to ensure the full function of the sensor (10); **in that** the operating readiness of the sensor (10) is furthermore determined in dependence on whether a short circuit is present at a switching output (42, Q) ; and **in that** it is indicated whether operating readiness is detected or not; or **in that** a signal is output which carries the status of the operating readiness.

## Revendications

1. Capteur optoélectronique (10) comprenant un émetteur de lumière (14) et/ou un capteur de lumière (20), une commande (12) ainsi qu'une unité de surveillance de tension d'alimentation (34),
**caractérisé en ce que**
l'unité de surveillance de tension d'alimentation (34) peut contrôler une tension d'alimentation appliquée par comparaison avec une tension de référence (32) générée de façon interne, **en ce que** la tension de référence (32) générée de façon interne est une mesure pour une tension d'alimentation minimum prédéterminée du capteur (10), tension qui peut prendre une valeur de 10 à 30 V, et **en ce que** la commande (32) est réalisée pour constater la capacité de fonctionnement du capteur (10) en fonction de savoir si la tension d'alimentation minimum est disponible, **en ce que** l'unité de surveillance de tension d'alimentation (34) contrôle si une tension de service appliquée depuis une alimentation électrique (30) à une borne (26) du capteur (10) correspond à la tension d'alimentation minimum, afin de garantir une tension d'alimentation spécifiée du capteur (10) qui suffit pour alimenter tous les composants du capteur (10) et donc garantir la pleine fonctionnalité du capteur (10),
**en ce que** le capteur (10) comporte une sortie commutée (42, Q) qui peut être activée par la commande (12), et la commande (12) est réalisée pour constater la capacité de fonctionnement du capteur (10) en fonction de savoir s'il existe un court-circuit à la sortie commutée (42, Q),
et **en ce qu'**il est prévu un affichage (36) au moyen duquel il est possible d'afficher si la commande (12) détecte une capacité de fonctionnement ou non, ou dans lequel il est prévu une sortie (38) via laquelle un signal peut être délivré qui porte le statut de l'état de fonctionnement.

2. Capteur (10) selon la revendication 1,
dans lequel la sortie commutée (42, Q) peut être activée uniquement quand la commande (12) constate une capacité de fonctionnement.

3. Capteur selon la revendication 1 ou 2,
dans lequel la commande (12) est mise en oeuvre sur un composant logique numérique, en particulier un PLD, un FPGA, un microcontrôleur ou un circuit ASIC.

4. Capteur (10) selon la revendication 3,
dans lequel la sortie commutée (42, Q) est réalisée soit de façon interne dans le composant logique numérique soit de façon externe, en particulier sous forme d'un propre transistor (42), et la surveillance d'un court-circuit est mise en oeuvre respectivement dans le composant logique numérique.

5. Capteur (10) selon l'une des revendications précédentes,
dans lequel l'unité de surveillance de tension d'alimentation (34) est réalisée de manière analogique, et comprend en particulier un comparateur, ou bien est réalisée de manière numérique, et la tension d'alimentation appliquée peut être rendue disponible à la commande au moyen d'un convertisseur analogique/numérique, afin de la comparer avec une valeur de tension de référence.

6. Capteur (10) selon l'une des revendications précédentes,
dans lequel la valeur de la tension de référence interne (32) est compensée dans le test final de la commande (10) et/ou du capteur (10), et la valeur est en particulier stockée sous forme numérique dans une mémoire de la commande (12).

7. Capteur (10) selon l'une des revendications précédentes,
dans lequel la tension de référence (32) est compensée de manière analogique au moyen d'un rognage du composant logique (12) au laser.

8. Capteur (10) selon l'une des revendications précédentes,
dans lequel l'affichage (36) comprend une diode électroluminescente, et dans lequel la capacité de fonctionnement peut être affichée sous forme d'un affichage continu et le manque de capacité de fonctionnement peut être affiché par désactivation de l'affichage (36) ou par une séquence clignotante.

9. Capteur (10) selon l'une des revendications précédentes,
dans lequel la sortie (38) est réalisée sous forme de sortie d'avertissement préalable de défaillance (38) ou sous forme d'interface de capteur (38) d'après le standard IO-Link, et dans lequel la commande (12) est réalisée pour délivrer le statut de la constatation de capacité de fonctionnement via la sortie d'avertissement préalable de défaillance (38) ou via l'interface IO-Link (38).

10. Capteur (10) selon l'une des revendications précédentes,
dans lequel il est prévu un élément détecteur de température, et la commande (12) est réalisée pour constater la capacité de fonctionnement uniquement si une température mesurée tombe à l'intérieur d'un intervalle admissible.

11. Procédé pour la surveillance de la tension d'alimentation d'un capteur optoélectronique (10) comprenant un émetteur de lumière (14) et/ou un récepteur de lumière (20), dans lequel on contrôle une tension d'alimentation appliquée,
**caractérisé en ce que**
la tension d'alimentation appliquée est contrôlée par comparaison avec une tension de référence (32) générée de manière interne, **en ce que** la tension de référence (32) générée de manière interne est une mesure pour une tension d'alimentation minimum prédéterminée du capteur (10), laquelle peut prendre une valeur de 10 à 30 V, et **en ce que** la capacité de fonctionnement du capteur (10) est constatée en fonction de savoir si la tension d'alimentation minimum est disponible, **en ce qu'**une unité de surveillance d'alimentation (34) contrôle si une tension de service appliquée depuis une alimentation électrique (30) à une borne (26) du capteur (10) correspond à la tension d'alimentation minimum, afin de garantir une tension d'alimentation spécifiée du capteur (10) qui suffit pour alimenter tous les composants du capteur (10) et ainsi garantir la pleine fonctionnalité du capteur (10), **en ce que** la capacité de fonctionnement du capteur (10) et en outre constatée en fonction de savoir si un court-circuit se présente à une sortie commutée (42, Q), et **en ce que** l'on affiche si l'on détecte une capacité de fonctionnement ou non, ou **en ce qu'**un signal est délivré qui porte le statut de la capacité de fonctionnement.
